(19)

Europäisches
Patentamt
European
Patent Office
Office européen
des brevets

(11) **EP 4 194 203 A1**

(12) **EUROPEAN PATENT APPLICATION**
published in accordance with Art. 153(4) EPC

(43) Date of publication:
**14.06.2023 Bulletin 2023/24**

(21) Application number: **21852164.9**

(22) Date of filing: **29.07.2021**

(51) International Patent Classification (IPC):
**B32B 27/30** (2006.01)      **B32B 27/20** (2006.01)
**B65D 65/40** (2006.01)

(52) Cooperative Patent Classification (CPC):
**B32B 27/20; B32B 27/30; B65D 65/40;**
Y02W 30/80

(86) International application number:
**PCT/JP2021/028150**

(87) International publication number:
**WO 2022/030361 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2020   JP 2020133747**

(71) Applicant: **TOYOBO CO., LTD.
Osaka-shi
Osaka 5300001 (JP)**

(72) Inventors:
• **YAMAZAKI, Atsushi
  Inuyama-shi, Aichi 484-8508 (JP)**
• **IWATA, Daisuke
  Inuyama-shi, Aichi 484-8508 (JP)**
• **YAMAGUCHI, Yuya
  Osaka-shi Osaka 530-8230 (JP)**

(74) Representative: **Vossius & Partner
Patentanwälte Rechtsanwälte mbB
Siebertstraße 3
81675 München (DE)**

(54)   **LAMINATED FILM AND PACKAGING MATERIAL**

(57)      An object is to provide a laminated film that is a film permitting formation of a laminate constitution constituted almost completely of a single type of resin having little environmental impact made up primarily of polypropylene film, and that has adhesive properties and gas barrier properties sought for packaging materials and moreover has properties as required to be suitable for undergoing processing and so forth. Means for solving it relates to a laminated film which is a laminated film that comprises a coating layer comprising an inorganic lamellar compound and a polyvinyl-alcohol-based copolymer on at least one face of a substrate film, the laminated film being characterized in that it satisfies conditions (a) through (d), below; (a) the substrate film is a stretched film employing propylenic resin; (b) the coating layer is attached thereto in an amount that is not less than 0.10 g/m$^2$ but not greater than 0.50 g/m$^2$; (c) a total reflection infrared absorption spectrum of the laminated film is such that a ratio (P1/P2) of a peak intensity (P1) at which there is maximum absorption in a 1040 cm$^{-1}$ $\pm$ 10 cm$^{-1}$ domain and a peak intensity (P2) at which there is maximum absorption in a 3300 cm$^{-1}$ $\pm$ 10 cm$^{-1}$ domain is within a range that is 3.0 to 25.0; and (d) arithmetic mean roughness in a 2-$\mu$m square of the coating layer at the laminated film is within a range that is 2.0 nm to 8.0 nm.

EP 4 194 203 A1

**Description**

TECHNICAL FIELD

The present invention relates to a gas barrier laminated film. More specifically, it relates to a gas barrier coated film which has little environmental impact during manufacture and at the time of disposal, and which is provided with both excellent gas barrier performance and adhesive strength such as will make it adequate for use as a packaging material.

BACKGROUND ART

Not only in Europe but in various countries around the world, regulations directed toward reduced use of disposable plastics have intensified in recent years. The backdrop for this includes a heightened level of international awareness toward recycling of resources and the increasing seriousness of the problem of trash in developing countries. For this reason, with respect to packaging materials that are made of plastic and that are in demand for foods, pharmaceutical agents, and so forth as well, there is demand for products that are environmentally responsive from the standpoint of the 3Rs (recycle, reuse, reduce).

As properties sought for the aforementioned environmentally friendly packaging materials, (1) that they comprise recyclable materials, (2) that they exhibit gas barrier performance such as will permit them to block various gases and prolong shelf life, (3) that they permit laminate constitutions such as will allow them to have little environmental impact (e.g., as a result of nonuse of organic solvent or due to the fact that the amount of material itself is small, or as a result of having been made recyclable due to monomaterial use), and so forth may be cited.

To make it possible to achieve (2) and (3), above, use of polypropylene film has attracted attention in recent years. Polypropylene film is employed for general use in a wide variety of applications where it is used as film for surface protection, for electrical insulation, and for packaging of foods and a wide variety of products and so forth. By virtue of its molecular structure, polypropylene film is capable of exhibiting good water vapor barrier properties. Moreover, as sealant for lamination with surface substrate film, because polypropylenic and polyethylenic heat seal resins are in common use, it is for example possible by using polypropylene film as surface substrate, and unstretched polypropylene sheeting as sealant, to achieve monomaterial construction for the overall packaging material while causing this to possess gas barrier properties, and it will be possible to attain a packaging material design that permits easy recycling and that is otherwise environmentally friendly.

However, regarding the gas barrier properties at (2), above, while polypropylene film does have water vapor barrier properties, there have been problems in that the values thereof are inadequate as compared for example with transparent inorganic vapor deposition polyester film which is typically thought to have excellent water vapor barrier properties, and in that the oxygen barrier properties thereof are extremely poor. To address this, films in which polypropylene film is laminated with polyvinyl alcohol, ethylene-vinyl alcohol copolymer, polyvinylidene chloride resin, polyacrylonitrile, or another such high-molecular-weight polymer resin composition commonly believed to have comparatively good oxygen barrier properties have come to be used (see, for example, Patent Reference Nos. 1 through 3).

However, because the humidity dependency of gas barrier coated films employing high-molecular-weight polymer resin compositions such as the aforementioned polyvinyl alcohol or ethylene-vinyl alcohol copolymer is large, it has been observed that the gas barrier properties thereof worsen under conditions of high humidity. Furthermore, while the humidity dependencies of polyvinylidene chloride resin and polyacrylonitrile are low, these have had problems in that the absolute values of the barrier values thereof have been inadequate, and moreover in that the hazard due to generation of harmful substances when these are discarded/incinerated has been large.

As a method for improving the humidity dependency of vinyl-alcohol-based resins, gas barrier coated films have been proposed in which laminated therein is a coating layer in which a silane-type crosslinking agent has been mixed with a vinyl-alcohol-based resin. In such a situation, because the vinyl-alcohol-based resin is crosslinked by silanol groups, humidity dependency is low, and satisfactory gas barrier properties are exhibited. (see, for example, Patent Reference Nos. 4 and 5)

However, because to cause crosslinking of these gas barrier coated films it is necessary that they be adequately subjected to heat treatment, in situations where the substrate is polypropylene film, not only does the thermal wrinkling that would occur during processing and the deterioration in mechanical characteristics that they would experience cause them to fail to satisfy characteristics such as would make them adequate for use as packaging material, but because a large amount of thermal energy is required when carrying out heat treatment during processing, they have also been undesirable from the standpoint of environmental impact. Water vapor barrier performance, moreover, has remained inadequate.

On the other hand, as means for further improving barrier performance, gas barrier coated films have been proposed in which laminated therein is a resin layer at which a vinyl-alcohol-based resin contains inorganic lamellar particles of a particular particle diameter and aspect ratio. In such a situation, inorganic lamellar particles present in dispersed fashion within the resin layer have a diverting effect on gas molecules, and satisfactory gas barrier properties are exhibited. (see, for example, Patent Reference Nos. 6 and 7)

However, it is often the case with such gas barrier coated films that the inorganic lamellar particles are not dispersed uniformly at the coated film, and there have consequently been cases in which this has interfered with adhesion with respect to the substrate film, and caused lamination strength to decrease. Furthermore, with respect to ability to also cause improvement in oxygen barrier properties and water vapor barrier properties, it has not been possible to obtain adequately satisfactory performance.

To achieve adequate barrier performance, it has been necessary with all of the aforementioned barrier coating layers that these be laminated therein at a thickness of at least 0.5 $\mu$m or greater. When the coating layer has been too thick, there has been the possibility that this could impede recycling, and this has also been unsuitable from the standpoint of achieving monomaterial construction through use of a single material. Moreover, with respect to processing operations during printing and so forth, there have also been issues concerning printing defects due to surface irregularities and coating nonuniformity.

PRIOR ART REFERENCES

PATENT DOCUMENTS

Patent Reference No. 1: Japanese Patent Application Publication Kokai No. 2000-52501
Patent Reference No. 2: Japanese Patent Application Publication Kokai No. H4[1992]-359033
Patent Reference No. 3: Japanese Patent Application Publication Kokai No. 2003-231221
Patent Reference No. 4: Japanese Patent Application Publication Kokai No. H4[1992]-345841
Patent Reference No. 5: Japanese Patent Application Publication Kokai No. 2006-95782
Patent Reference No. 6: Japanese Patent Application Publication Kokai No. H9[1997]-111017
Patent Reference No. 7: Japanese Patent Application Publication Kokai No. 2005-35167

SUMMARY OF THE INVENTION

PROBLEM TO BE SOLVED BY INVENTION

At the foregoing Patent Reference Nos. 1 through 3, not only was barrier performance inadequate, but no study was made of an environmentally friendly design. At Patent Reference Nos. 4 and 5, no study was made regarding coating processing such as might be appropriate for polypropylene film, nor was there adequate discussion of water vapor barrier properties. At Patent Reference No. 6, no investigation was made with respect to water vapor barrier properties or improvement of adhesive properties. At Patent Reference No. 7, no investigation was made with respect to oxygen barrier properties. Furthermore, none of the references engages in environmentally friendly considerations or constitutes improvement in workability due to employment of a coating layer in the form of a thin film.

In other words, a material such as would satisfy each of three properties sought for the foregoing environmentally friendly packaging materials-i.e., (1) that they contain constituent materials in the form of recyclable materials, (2) that they exhibit gas barrier performance such as will permit them to block various gases and prolong shelf life, (3) that they are capable of easily being recycled and permit laminate constitutions (monomaterial construction) such as will allow them to have little environmental impact-has not existed conventionally.

The present invention was conceived with such problems of the conventional art as background.

To wit, it is an object of the present invention to provide a laminated film that is a film permitting formation of a laminate constitution constituted almost completely of a single type of resin having little environmental impact made up primarily of polypropylene film, and that has adhesive properties and gas barrier properties sought for packaging materials and moreover has properties as required to be suitable for undergoing processing and so forth.

MEANS FOR SOLVING PROBLEM

The present inventor(s) discovered that great improvement in gas barrier performance could be achieved by laminating a prescribed coating layer conforming to the required properties over a polypropylene film, and moreover that a film having little environmental impact could be provided, which culminated in the present invention.

That is, the present invention is constituted as follows.

1. A laminated film which is a laminated film that comprises a coating layer comprising an inorganic lamellar compound and a polyvinyl-alcohol-based copolymer on at least one face of a substrate film, the laminated film being characterized in that it satisfies conditions (a) through (d), below;
the laminated film is characterized in that:

(a) the substrate film is a stretched film employing a propylenic copolymer;
(b) the coating layer is attached thereto in an amount that is not less than 0.10 g/m$^2$ but not greater than 0.50 g/m$^2$;
(c) a total reflection infrared absorption spectrum of the laminated film is such that a ratio (P1/P2) of a peak intensity (P1) at which there is maximum absorption in a 1040 cm$^{-1}$ $\pm$ 10 cm$^{-1}$ domain and a peak intensity (P2) at which there is maximum absorption in a 3000 cm$^{-1}$ $\pm$ 10 cm$^{-1}$ domain is within a range that is 3.0 to 25.0; and
(d) arithmetic mean roughness in a 2-$\mu$m square of the coating layer at the laminated film is within a range that is 2.0 nm to 8.0 nm.

2. The laminated film according to 1. characterized in that oxygen permeability of the laminated film in an environment that is 23° C and 65% RH is not greater than 50 ml/m$^2$·d·MPa; and water vapor permeability thereof in an environment that is 40° C and 90% RH is not greater than 4 g/m$^2$·d.
3. The laminated film according to 1. or 2. characterized in that the inorganic lamellar compound of the coating layer contains a montmorillonitic compound as a constituent component thereof.
4. Packaging material in which an olefinic sealant layer is laminated to one face of the laminated film according to any of 1. through 3..

EFFECT OF THE INVENTION

The present inventor(s) were able through such technology to provide a laminated film having barrier properties, adhesive properties, workability, and other such required properties sought for packaging materials while also being environmentally friendly.

EMBODIMENTS FOR CARRYING OUT THE INVENTION

The present invention is described in detail below.

Substrate Film Layer

It is preferred that the propylenic resin stretched film employed as substrate film in accordance with the present invention be biaxially stretched film. As biaxially stretched polypropylenic resin film, publicly known biaxially stretched polypropylenic resin films may be used, there being no particular limitation with respect to the raw material(s) thereof, the ratio(s) in which these are mixed, and so forth. For example, besides polypropylene homopolymer (propylene homopolymer), this might be a random copolymer, block copolymer, or the like of propylene serving as primary constituent, with one species, or two or more species, selected from among ethylene, butene, pentene, hexene, and other such $\alpha$-olefins, or might be a mixture obtained by mixing two or more polymers thereof. Furthermore, with the object of modifying the physical properties thereof, antioxidant, antistatic agent, plasticizer, and/or other such publicly known additives may be added thereto; for example, petroleum resin, terpene resin, and/or the like may be added thereto.
Furthermore, a biaxially stretched polypropylenic resin film employed in accordance with the present invention might be a single-layer film, or it might be a laminated film in which a plurality of resin films including biaxially stretched polypropylenic resin film(s) are laminated. Where this is a laminated film, there is no particular limitation with respect to the type of laminated body, number of laminated layers, lamination method, and so forth, it being possible to select any as desired from among publicly known methods in accordance with the object.
In accordance with the present invention, as polypropylene resin that makes up the substrate film, it is preferred that this be propylene homopolymer which contains substantially no comonomer, or where comonomer is present it is preferred that the amount of comonomer contained therein be not greater than 0.5 mol%. It is more preferred that the upper limit of the range in values for the amount of comonomer be 0.3 mol%, and still more preferred that this be 0.1 mol%. Within the foregoing ranges, crystallinity will be improved, there will be little thermal shrinkage at high temperatures, and heat resistance will be improved. To the extent that it would not cause marked decrease in crystallinity, note that small amounts of comonomer(s) may be present therein.
It is preferred that the polypropylene resin that makes up the substrate film contain propylene homopolymer which is obtained from only propylene monomer, and where this is propylene homopolymer it is most preferred that it not contain dissimilar bonding; e.g., bonding might be head-to-head.
Based on practical considerations, the lower limit of the range in values for the xylene-soluble component of the polypropylene resin that makes up the substrate film is preferably 0.1 mass%. The upper limit of the range in values for the xylene-soluble component is preferably 7 mass%, more preferably 6 mass%, and still more preferably 5 mass%. Within the foregoing ranges, crystallinity will be improved, there will be less thermal shrinkage at high temperatures, and heat resistance will be improved.

In accordance with the present invention, it is preferred that the lower limit of the range in values for the melt flow rate (MFR) (230° C; 2.16 kgf) of the polypropylene resin be 0.5 g/10 min. It is more preferred that the lower limit of the range in values for the MFR be 1.0 g/10 min, still more preferred that this be 2.0 g/10 min, particularly preferred that this be 4.0 g/10 min, and most preferred that this be 6.0 g/10 min. Within the foregoing ranges, mechanical load will be small, facilitating extrusion and stretching. It is preferred that the upper limit of the range in values for the MFR be 20 g/10 min. It is more preferred that the upper limit of the range in values for the MFR be 17 g/10 min, still more preferred that this be 16 g/10 min, and particularly preferred that this be 15 g/10 min. Within the foregoing ranges, stretching will be facilitated, unevenness in thickness will be reduced, it will be easier to increase stretching temperature and/or heat setting temperature, there will be less thermal shrinkage, and heat resistance will be improved.

While the aforementioned substrate film may be film that is uniaxially stretched in the machine direction (MD direction) or the transverse direction (TD direction), it is preferred from the standpoint of heat resistance that it be biaxially stretched film. By carrying out stretching in at least one axial direction in accordance with the present invention, it is possible to obtain a film that possesses heat resistance which is of such a high degree, and thermal shrinkage at high temperatures which is of such a low degree, as would not have been predictable with a conventional polypropylene film. As stretching method, while simultaneous biaxial stretching, sequential biaxial stretching, and so forth may be cited, from the standpoints of achieving satisfactory planarity, dimensional stability, thickness nonuniformity, and so forth, sequential biaxial stretching is preferred.

As sequential biaxial stretching method, polypropylene resin might be heated and melted at a single-screw extruder or a twin-screw extruder so as to cause the resin temperature to be not less than 200° C but not greater than 280° C, this might be made to emerge in sheet-like fashion from a T die, and this might be extruded onto a chill roller which is at a temperature of not less than 10° C but not greater than 100° C to obtain an unstretched sheet. Next, this might be made to undergo roller stretching in the machine direction (MD direction) by a factor of not less than 3.0x but 8.0x at not less than 120° C but not greater than 165° C, and might, following preheating within a tenter, thereafter be stretched in the transverse direction (TD) by a factor of not less than 4.0x but not greater than 20.0x at a temperature of not less than 155° C but not greater than 175° C. Moreover, following biaxially stretching, heat setting treatment might be carried out while allowing this to relax by not less than 1% but not greater than 15% at a temperature of not less than 165° C but not greater than 175° C.

So as to permit it to be imparted with handling characteristics (e.g., ability to be wound up into a roll following lamination), it is preferred that the substrate film employed in the present invention be such that the film be made to contain particles and be such that projections are formed on the film surface. As particles which the film may be made to contain, silica, kaolinite, talc, calcium carbonate, zeolite, alumina, and other such inorganic particles, and acrylic, PMMA, nylon, polystyrene, polyester, benzoguanamine-formaldehyde condensate, and other such heat-resistant high-molecular-weight particles may be cited. From the standpoint of transparency, it is preferred that the amount of particles contained within the film be small, it being preferred, for example, that this be not less than 1 ppm but not greater than 1000 ppm. Also, from the standpoint of transparency, it is preferred that the particles be chosen so as to have a refractive index which is close to that of the resin(s) used. Furthermore, to impart any of various functionalities to the film as may be necessary, it may be made to contain antioxidant, ultraviolet light absorber, antistatic agent, pigment, lubricant, nucleating agent, adhesive, antifogging agent, flame retardant, antiblocking agent, organic and/or inorganic filler, and/or the like.

To the extent that doing so would not impair the object of the present invention, with the object of improving the mechanical characteristics of the substrate film, improving adhesion with respect to adhesion layer(s) and/or ink layer(s) such as may be laminated over the aforementioned gas barrier coating layer, and/or the like, the film may also be made to contain other than the polypropylene resin employed in the present invention. Polypropylene resins other than the aforementioned, random copolymers which are copolymers of propylene and ethylene and/or an $\alpha$-olefin having not less than four carbons, any of various elastomers, and so forth may be cited as examples.

In accordance with the present invention, while thickness of the substrate film may be chosen as desired in correspondence to the respective applications, it is preferred that the lower limit of the range in values therefor be not less than 2 $\mu$m, more preferred that this be not less than 3 $\mu$m, and still more preferred that this be not less than 4 $\mu$m. On the other hand, it is preferred that the upper limit of the range in values for the thickness thereof be not greater than 300 $\mu$m, more preferred that this be not greater than 250 $\mu$m, still more preferred that this be not greater than 200 $\mu$m, and particularly preferred that this be not greater than 100 $\mu$m. Where thickness is too small, this will tend to cause handling characteristics to become poor. On the other hand, where thickness is too large, not only will this present a problem from the standpoint of cost, but when rolled up and stored in a rolled state, the resulting curl will also tend to cause occurrence of poor planarity.

From the standpoint of ability to visually perceive contents, it is preferred that haze of the polypropylene film employed as substrate in accordance with the present invention be such that it has transparency; more specifically, it is preferred that this be not greater than 6%, more preferred that this be not greater than 5%, and still more preferred that this be not greater than 4%. Because there is a tendency for haze to worsen when, for example, stretching temperature or heat setting temperature is too high, when cooling roller (CR) temperature is high and cooling rate of the stretching stock material sheet is low, or when the amount that is of low molecular weight is too high, by adjusting these it will be possible to control this so as to cause it to be within the foregoing ranges. Here, evaluation of haze was carried out using a turbidimeter (NDH2000; manufactured by Nippon Denshoku) in accordance with JIS K7136.

Furthermore, so long as it does not impair the object of the present invention, a substrate film layer in accordance with the present invention may be subjected to corona discharge treatment, glow discharge treatment, flame treatment, and/or surface roughening treatment; and may furthermore be subjected to publicly known anchor coat treatment, printing, ornamentation, and/or the like. Note, however, that because resins other than polyurethane and polyester or other such polyolefins are commonly employed at anchor coats, it is preferred from the standpoint of ability to achieve monomaterial construction that anchor coat treatment not be carried out.

Coating Layer

In accordance with the present invention, with the object of improving adhesive properties and/or gas barrier performance of substrate film(s), coating layer(s) may be present. But note that attention should also be given during design to the fact that increase in the number of operations that will result from causing coating layer(s) to be provided in accordance with the present invention will increase cost and may, depending on film thickness(es), have an impact on the environment, such as would be the case were this to cause recycling to become difficult or the like.

It is preferred that the amount of coating layer attached thereto be 0.10 to 0.50 (g/m$^2$). Where a coating layer employing an inorganic lamellar compound and a polyvinyl-alcohol-based copolymer, described below, is used at the aforementioned polypropylenic resin substrate, the present inventor(s) discovered that causing the amount attached thereto to be within the foregoing specific range permits simultaneous achievement of each of the following: gas barrier properties, a good external appearance of the coating, adhesive properties, and recyclability. Because this will make it possible to control the coating layer so as to be uniform during coating thereof, the film that is produced will consequently have little coating nonuniformity and few defects. Furthermore, because the coating layer is thin, this permits a contribution to be made toward reduction in contaminants and so forth where recycling is utilized. It is preferred that the lower limit of the range in values for the amount of coating layer attached thereto be not less than 0.15 (g/m$^2$), more preferred that this be not less than 0.20 (g/m$^2$), and still more preferred that this be not less than 0.25 (g/m$^2$); and it is preferred that the upper limit of the range in values therefor be not greater than 0.45 (g/m$^2$), more preferred that this be not greater than 0.40 (g/m$^2$), and still more preferred that this be not greater than 0.35 (g/m$^2$). When the amount of coating layer attached thereto exceeds 0.50 (g/m$^2$), while gas barrier properties will be improved, because cohesive forces at the interior of the coating layer will be inadequate, and because there will also be a decrease in the uniformity of the coating layer, there will be occurrence of defects and/or nonuniformities in the external appearance of the coating (increase in haze and/or whitening), and there will also be situations in which gas barrier properties and/or adhesiveness cannot adequately be achieved. Furthermore, from the standpoint of workability, there is also a possibility that the large film thickness would cause occurrence of blocking. Moreover, there is also a concern that this would have an adverse effect on the recyclability of the film. On the other hand, when film thickness of the coating layer is below 0.10 (g/m$^2$), there is a possibility that it will not be possible to obtain adequate gas barrier properties and interlayer adhesion.

As a resin composition which may be employed at a coating layer formed at a surface of a laminated film in accordance with the present invention, it is preferred that this be a polyvinyl-alcohol-based polymer. As a polyvinyl-alcohol-based polymer will have vinyl alcohol units as principal constituent components, this will make it possible to anticipate dramatic improvement in barrier performance due to the high degree of cohesion afforded by the hydrogen-bonded structure. The degree of polymerization and the degree of saponification of the polyvinyl-alcohol-based polymer should be established based on such things as the viscosity of the aqueous coating solution and the gas barrier properties that are intended. Regarding the degree of polymerization thereof, as coating would be difficult based on the fact that aqueous solution viscosity is high and the ease with which gel formation occurs, from the standpoint of ease of operations during coating it is preferred that this be not greater than 2600. Regarding the degree of saponification, below 90% it will not be possible to obtain adequate oxygen gas barrier properties under conditions of high humidity, while above 99.7% would not be suited for industrial production, as adjustment of the aqueous solution would be difficult and gel formation would tend to occur. Accordingly, it is preferred that the degree of saponification thereof be 90% to 99.7%, and still more preferred that this be 93% to 99%. Furthermore, in accordance with the present invention, to the extent that doing so would not impair workability or productivity, it is also possible to use polyvinyl-alcohol-based polymers that have been copolymerized with ethylene, polyvinyl-alcohol-based polymers that have been modified with silanol, and various other such copolymerized and/or modified polyvinyl-alcohol-based polymers.

A coating layer in accordance with the present invention contains inorganic lamellar compound(s). Presence of an inorganic lamellar compound will make it possible to anticipate a labyrinth effect with respect to gases, improving gas barrier properties. As materials, smectite, kaolin, mica, hydrotalcite, chlorite, and other such clay minerals (including synthetic products thereof) may be cited. More specifically, montmorillonite, beidellite, saponite, hectorite, sauconite, stevensite, kaolinite, nacrite, dickite, halloysite, hydrated halloysite, tetrasililic mica, sodium tainiolite, muscovite, margarite, phlogopite, talc, antigorite, chrysotile, pyrophyllite, vermiculite, xanthophyllite, chlorite, and so forth may be cited. Silica flakes and the like may also be used as inorganic lamellar compound. Any one of these may be used alone, or two or more species chosen from thereamong may be used in combination. Thereamong, smectite (including synthetic products thereof) is particularly preferred because of its large improvement effect with respect to water vapor barrier properties.

Furthermore, inorganic lamellar compounds in which metal ions, particularly iron ions, having oxidation-reduction capability, are present therewithin are preferred. Moreover, among such substances, from the standpoint of gas barrier properties and suitability for coating, montmorillonite, which is a type of smectite, is preferred. As montmorillonite, publicly known substances that have conventionally been employed as gas barrier agents may be used.

For example, there is the following general formula:

$$(X,Y)2\text{-}3Z4O10(OH)2 \cdot mH2O \cdot (W\omega)$$

(In the formula, X indicates Al, Fe (III), or Cr (III); Y indicates Mg, Fe (II), Mn (II), Ni, Zn, or Li; Z indicates Si or Al; W indicates K, Na, or Ca; H2O indicates interlayer water; m and $\omega$ indicate positive real numbers.)

Thereamong, substances for which W in the formula is Na are preferred due to the fact that they undergo cleavage when in water-soluble media.

While there is no particular limitation with respect to the size or shape of the inorganic lamellar compound, in terms of particle diameter (major axis), not greater than 5 $\mu$m is preferred, not greater than 4 $\mu$m is more preferred, and not greater than 3 $\mu$m is even more preferred. When particle diameter is greater than 5 $\mu$m, dispersion characteristics will be inferior, as a result of which there is a possibility that the coatability of the coating layer and/or the external appearance of the coating may worsen. On the other hand, the aspect ratio thereof is 50 to 5000, 100 to 4000 being more preferred, and 200 to 3000 being even more preferred.

It is preferred that the ratio in which polyvinyl-alcohol-based copolymer and inorganic lamellar compound are blended within the coating layer of the present invention be 75/25 to 35/65 (wt%), more preferred that this be 70/30 to 40/60 (wt%), and still more preferred that this be 65/35 to 45/55 (wt%). When the ratio in which inorganic lamellar compound is blended therein is less than 25%, there is a possibility that barrier performance will be inadequate. On the other hand, when this is greater than 65%, there is a possibility that this will cause dispersion characteristics to worsen and coatability to deteriorate, and/or that adhesive properties will worsen.

In accordance with the present invention, it is necessary that the total reflection infrared absorption spectrum of the coating layer be such that the ratio (P1/P2) of the peak intensity (P1) at which there is maximum absorption in the 1040 cm$^{-1}$ $\pm$ 10 cm$^{-1}$ domain and the peak intensity (P2) at which there is maximum absorption in the 3300 cm$^{-1}$ $\pm$ 10 cm$^{-1}$ domain is within the range 3.0 to 25.0. Within the range 4.0 to 24.0 is preferred, and within the range 5.0 to 23.0 is more preferred. The peak at 1040 cm$^{-1}$ $\pm$ 10 cm$^{-1}$ is a peak attributable to the silica molecular structure, and serves as an indicator of the amount of silica bonds attributable to the inorganic lamellar compound present within the coating layer. Furthermore, the peak at 3300 cm$^{-1}$ $\pm$ 10 cm$^{-1}$ is a peak attributable to hydroxyl groups, and serves as an indicator of the amount of hydroxyl groups present within the coating layer. (P1/P2) indicates the ratio between silica bonds and hydroxyl groups, and by causing this ratio to be within the foregoing ranges it is possible for silica particles to be arranged within the film without interfering with hydrogen bonding of hydroxyl groups, and to consequently permit gas barrier performance to be exhibited to the maximum extent possible. Furthermore, this also makes simultaneous achievement of adhesion possible. When (P1/P2) is less than 3.0, because the amount of silica bonds present within the coating layer will be too small, making it impossible to obtain a labyrinth effect, there are situations in which this will cause it to be difficult to obtain satisfactory gas barrier properties. Furthermore, regarding workability, there is a possibility that there would be a tendency for blocking to occur due to the coating layer. On the other hand, when (P1/P2) exceeds 25.0, although gas barrier properties will be improved, not only will the film be brittle, and not only would this be disadvantageous from the standpoint of adhesive properties when formed into a laminated body, but there would also be a concern that dispersion characteristics of the coating solution would worsen, and there would be occurrence of poor external appearance (increase in haze and/or whitening) during coating. To cause the value of (P1/P2) at the coating layer to be within the foregoing prescribed numeric ranges, it is necessary that the aforementioned material(s) be used and that these be attached thereto in the aforementioned prescribed amount(s), and moreover that the ratio(s) in which the materials are blended be within the aforementioned appropriate ranges, and that this be done in combination with the drying/heat treatment conditions that are described below.

In accordance with the present invention, it is preferred that the arithmetic mean roughness of the coating layer within a 2-μm square field angle using an atomic force microscope be 2.0 nm to 8.0 nm. This will make it possible to maintain the uniformity of the coating layer and to achieve stable barrier performance, and will make it possible to increase adhesive properties and/or resistance to blocking as a result of formation of surface irregularities which are primarily attributable to coordination by the inorganic lamellar particles. It is preferred that the arithmetic mean roughness thereof be not less than 2.5 nm, more preferred that this be not less than 3.0 nm, and still more preferred that this be not less than 3.5 nm; and it is preferred that this be not greater than 7.5 nm, more preferred that this be not greater than 7.0 nm, and still more preferred that this be not greater than 6.5 nm. When the arithmetic mean roughness thereof exceeds 8.0 nm, because the surface will be too rough and uniformity of the coating layer will be reduced, there will be occurrence of defects and/or nonuniformities in the external appearance of the coating, and there will also be situations in which there is decrease in suitability for printing, adhesion, and/or barrier properties. On the other hand, when arithmetic mean roughness is less than 2.0 nm, because the surface will be too flat, there is a possibility that there will be decrease in adhesion, ability for ink to be transferred thereto during printing, and/or the like. Furthermore, as described below, there is a possibility that this would also cause worsening of resistance to blocking, and that blocking would occur when the film is wound into a rolled state.

To cause the value of arithmetic mean roughness to be within the foregoing prescribed numeric ranges, it is necessary that the aforementioned material(s) be used and that these be attached thereto in the aforementioned prescribed amount(s), and moreover that the ratio(s) in which the materials are blended be within the aforementioned appropriate ranges, and that this be done in combination with the coating solution dilution conditions and the drying/heat treatment conditions that are described below.

With the object of improving moist-heat-resistant adhesive properties and improving cohesive forces at the film, to the extent that doing so would not impair gas barrier properties or productivity, any of various crosslinking agents may be blended within the coating layer of the present invention. As crosslinking agents, silicon-type crosslinking agents, oxazoline compounds, carbodiimide compounds, epoxy compounds, isocyanate compounds, and so forth may be listed as examples. Thereamong, from the standpoint of improving water-resistant adhesive properties particularly with respect to the inorganic thin film layer as a result of causing silicon-type crosslinking agent to be blended therein, silicon-type crosslinking agents are particularly preferred. As additional crosslinking agent(s), oxazoline compound(s), carbodiimide compound(s), epoxy compound(s), and/or the like may be used in combination therewith. Note, however, that where priority is given to recyclability, it is preferred that no crosslinking agent be blended therein.

From the standpoint of ability to visually perceive contents, it is preferred in accordance with the present invention that film haze following lamination of the coating layer be not greater than 20%, more preferred that this be not greater than 18%, and still more preferred that this be not greater than 16%. When haze is greater than 20%, in addition to the fact that transparency will be greatly degraded, there is a concern that this could also have an effect on surface irregularity, and there is a possibility that this could lead to poor external appearance at any printing operation or the like which may follow. Note that haze may be adjusted by adjusting the coating layer composition ratio, solvent conditions, film thickness, and so forth. Here, evaluation of haze was carried out using a turbidimeter (NDH2000; manufactured by Nippon Denshoku) in accordance with JIS K7136.

There is no particular limitation with respect to the technique used to apply the coating layer resin composition so long as it is a method that causes this to be applied and a layer to be formed on the film surface. For example, gravure coating, reverse roll coating, wirewound bar coating, die coating, and/or other such ordinary coating methods may be employed.

When forming the coating layer, following application of the coating layer resin composition, because causing this to be predried at a comparatively low temperature to first volatilize the solvent and thereafter causing this to undergo drying proper at a high temperature will make it possible to obtain a uniform film, this is preferred. It is preferred that the temperature at which predrying is carried out be 80° to 110° C, more preferred that this be 85° to 105° C, and still more preferred that this be 90° to 100° C. When the temperature at which predrying is carried out is less than 80° C, there is a possibility that there will be occurrence of inadequate drying at the coating layer. Furthermore, when the predrying temperature is greater than 110° C, there is a possibility that drying will proceed before the wet coating layer has had a chance to spread and that this will cause external appearance to be poor.

On the other hand, it is preferred that the temperature at which drying proper is carried out be 110° to 140° C, more preferred that this be 115° to 135° C, and still more preferred that this be 120° to 130° C. When the temperature at which drying proper is carried out is below 110° C, failure of film formation to proceed at the coating layer will cause decrease in cohesive forces and adhesive properties, as a result of which there is a possibility that this could also have an adverse effect on barrier properties. Above 140° C, there is a possibility that too much heat will be applied to the film, the film will become brittle, and/or wrinkles due to thermal shrinkage will become large.

Preferred drying time during predrying is 3.0 seconds to 10.0 seconds, more preferred is 3.5 seconds to 9.5 seconds, and still more preferred is 4.0 seconds to 9.0 seconds. Furthermore, preferred drying time during drying proper is 3.0 seconds to 10.0 seconds, more preferred is 3.5 seconds to 9.5 seconds, and still more preferred is 4.0 seconds

to 9.0 seconds. But note that caution should be exercised, since drying conditions will vary depending on the technique employed by the heating medium and the situation with respect to ventilation at the drying oven. Furthermore, as distinct from drying, causing this to be subjected to additional heat treatment in as low-temperature a domain as possible, specifically for 1 day to 4 days in a 40° to 60° C temperature domain, will be even more effective in terms of causing film formation at the coating layer to proceed.

Packaging Material

Where a laminated film in accordance with the present invention is to be used as packaging material, it is preferred that this be fashioned into a laminated body in which there is formed therein a heat-sealable resin layer that may be referred to as a sealant. While the heat-sealable resin layer is ordinarily provided over the coating layer, it is sometimes provided toward the exterior from the substrate film layer (the face on the side opposite the face at which the coating layer is formed). Formation of the heat-sealable resin layer is ordinarily accomplished through use of the extruded lamination method or the dry lamination method. As thermoplastic polymer(s) for forming the heat-sealable resin layer, it is sufficient that adequate manifestation of sealant adhesive properties be permitted thereby, it being possible to use olefinic HDPE, LDPE, LLDPE, and other such polyethylene resins, polypropylene resin, ethylene-vinyl acetate copolymer, ethylene-$\alpha$-olefin random copolymer, ionomer resin, and so forth. Thereamong, from the standpoints of endurance, seal strength, cost, and achieving monomaterial construction, LLDPE or polypropylene resins which are universal in terms of applications are particularly preferred. It is preferred that thickness of the sealant layer be 20 $\mu$m to 100 $\mu$m, still more preferred that this be 30 $\mu$m to 90 $\mu$m, and even more preferred that this be 40 $\mu$m to 80 $\mu$m. When thickness is less than 20 $\mu$m, it may be that it will not be possible to obtain adequate seal strength therefrom, and there is a possibility that the lack of resilient texture will make handling thereof difficult. On the other hand, when thickness exceeds 100 $\mu$m, besides the fact that its highly resilient texture will cause handling characteristics when used as a pouch to worsen, there is also a possibility that this would cause increase in cost.

Adhesive Layer

The adhesive layer used in the present invention may employ general-purpose adhesive(s) for lamination. For example, (non)solvent-type, water-soluble-type, and/or hot-melt-type adhesive(s) having primary constituent(s) of the poly(ester)urethane type, polyester type, polyamide type, epoxy type, poly(meth)acrylic type, polyethylene imine type, ethylene-(meth)acrylate type, polyvinyl acetate type, (modified) polyolefin type, polybutadiene type, wax type, casein type, and/or the like may be employed. Thereamong, based upon consideration of heat resistance and of flexibility such as will be capable of following changes in dimensions at the respective substrates, those of the urethane type or polyester type are preferred. As method for laminating the foregoing adhesive layer therewith, coating may, for example, be carried out using the direct gravure coating method, the reverse gravure coating method, the kiss coating method, the die coating method, the roll coating method, the dip coating method, the knife coating method, the spray coating method, the fontaine coating method, or other such method, it being preferred for adequate manifestation of adhesiveness that the amount coated thereon following drying thereof be 1 g/m$^2$ to 8 g/m$^2$. 2 g/m$^2$ to 7 g/m$^2$ is more preferred, and 3 g/m$^2$ to 6 g/m$^2$ is even more preferred. When the amount coated thereon is below 1 g/m$^2$, it will be difficult to achieve lamination over the entire face thereof, and adhesive forces will be reduced. Furthermore, above 8 g/m$^2$ or higher, it will take a long time for the film to cure completely, increasing the tendency for unreacted matter to remain, and causing decrease in adhesive forces.

Moreover, at a laminated film in accordance with the present invention, at least one or more layers of other plastic substrate(s), paper substrate(s), and/or printing layer(s) may be laminated therewith between the substrate film layer and the heat-sealable resin layer and/or toward the exterior therefrom.

As printing ink for forming the printing layer, printing inks that contain resin(s) of the water-soluble or solvent type may be favorably employed. As resins that may be used in printing inks here, acrylic-type resins, urethane-type resins, polyester-type resins, vinyl chloride-type resins, vinyl-acetate-copolymerized resins, and mixtures thereof may be listed as examples. The printing ink may be made to contain antistatic agent, light ray screening agent, ultraviolet light absorber, plasticizer, lubricity-increasing agent, filler, colorant, stabilizer, lubricant, antifoaming agent, crosslinking agent, antiblocking agent, antioxidant, and/or other such publicly known additive(s). As the printing method for causing the printing layer to be provided thereat, there being no particular limitation with respect thereto, the offset printing method, gravure printing method, screen printing method, or other such publicly known printing method may be employed. For drying of solvent following printing, hot air drying, hot roll drying, infrared drying, or other such publicly known drying method may be employed.

From the standpoint of ability to manifest satisfactory gas barrier properties, a laminated body in accordance with the present invention will preferably exhibit an oxygen permeability under conditions of 23° C and 65% RH that is not greater than 50 ml/m$^2$·d·MPa. Moreover, by controlling the aforementioned coating layer components, amount attached thereto, and so forth, it will be possible to cause this to preferably be not greater than 40 ml/m$^2$·d·MPa, and to more preferably be not greater than 30 ml/m$^2$·d·MPa. When oxygen permeability exceeds 50 ml/m$^2$·d·MPa, it will be difficult to accommodate applications in which a high degree of gas barrier performance required. On the other hand, when oxygen permeability of any thereamong is below 1 ml/m$^2$·d·MPa, while barrier performance will be excellent, because residual solvent will tend not to pass therethrough to the exterior of the pouch, and because there is a possibility that this could cause increase in the relative amount that migrates to the contents, it is not preferred. A preferred lower limit of the range in values for oxygen permeability is not less than 1 ml/m$^2$·d·MPa.

From the standpoint of ability to manifest satisfactory gas barrier properties, a laminated body in accordance with the present invention will preferably exhibit a water vapor permeability of any thereamong under conditions of 40° C and 90% RH that is not greater than 4.0 g/m$^2$·d. Moreover, by controlling the aforementioned coating layer components and the amount attached thereto, it will be possible to cause this to preferably be not greater than 3.5 g/m$^2$·d, and to more preferably be not greater than 3.0 g/m$^2$·d. When water vapor permeability exceeds 4.0 g/m$^2$·d, it will be difficult to accommodate applications in which a high degree of gas barrier performance required. On the other hand, when water vapor permeability of any thereamong is below 0.1 g/m$^2$, while barrier performance will be excellent, because residual solvent will tend not to pass therethrough to the exterior of the pouch, and because there is a possibility that this could cause increase in the relative amount that migrates to the contents, it is not preferred. A preferred lower limit of the range in values for water vapor permeability is not less than 0.1 g/m$^2$·d.

At a laminated body in accordance with the present invention, it is preferred that lamination strength of any thereamong under conditions of 23° C and 65% RH be not less than 1.0 N/15 mm, more preferred that this be not less than 1.5 N/15 mm, and still more preferred that this be not less than 2.0 N/15 mm. When lamination strength is below 1.0 N/15 mm, flexural load and/or heat at the time of sealing may cause occurrence of delamination and deterioration in barrier properties, as a result of which there is a possibility that the contents may leak out therefrom. Moreover, there is also a possibility that there will be decrease in ability to be cut by hand.

Working Examples

Although the present invention is next described more specifically in terms of working examples, it should be understood that the present invention is not to be limited by the following examples. Note that evaluation of the film was carried out using the following measurement methods.

(1) Laminated Film Thickness

Measurement was carried out using a dial gauge in accordance with the method at JIS K7130-1999 A.

(2) Haze of Laminated Film

Measurement was carried out using an NDH-2000 hazemeter (manufactured by Nippon Denshoku Industries Co., Ltd.) in accordance with JISK7136.

(3) Amount of Coating Layer Attached Thereto

For each of the respective Working Examples and Comparative Examples, using samples in the form of the laminated film obtained at the step in which the coating layer had been laminated to the substrate film, 100 mm × 100 mm test pieces being cut from these samples, ethanol was used to wipe the coating layers off therefrom, the amount that was attached thereto being calculated from the change in the mass of the film after versus before wiping.

(4) Laminated Film Total Reflection Infrared Absorption Spectrum Measurement Method

At each of the respective Working Examples and Comparative Examples, total reflection absorption infrared spectroscopy was used to measure the total reflection infrared absorption spectrum at the face at which the coating layer was present at the laminated film obtained at the step in which the coating layer had been laminated to the substrate film, the laminated film being measured by itself, peak intensity (P1) at which there was maximum absorption in the 1040 cm$^{-1}$ ± 10 cm$^{-1}$ domain and peak intensity (P2) at which there was maximum absorption in the 3000 cm$^{-1}$ ± 10 cm$^{-1}$ domain were determined, and the ratio (P1/P2) between those intensities was calculated. Calculation of respective peak intensities was carried out based on the height of the peak along a vertical line drawn so as to connect the top of the peak with the baseline corresponding to zero absorbance.

(5) Method for Measuring Arithmetic Mean Roughness of Coating Layer

A scanning probe microscope (SPM) ("SPM9700" manufactured by Shimadzu Corporation) was used (cantilever: OMCL-AC200TS provided by Olympus Corporation was used; observational mode: phase mode) to carry out measurement of the surface roughness of the laminated film. More specifically, the SPM images obtained were within a 2-$\mu$m square field angle at the film surface. Tilt correction, this being a functionality of the software that was provided with the SPM, was used on the images that were obtained, the value of arithmetic mean roughness being calculated following correction of tilt in the X direction, Y direction, and Z direction. From the roughness curve obtained following use of a high pass filter to remove the surface waviness component above a prescribed wavelength from the profile curve, that which corresponded to the sampling length in the direction of the average line thereof was extracted, the X axis being taken to be in the direction of the average line of that extracted portion and the Y axis being taken to be in the direction of vertical magnification, arithmetic mean roughness being taken to be the value obtained when the value determined from the following formula was expanded to two dimensions when the roughness curve was expressed in the form y = f(X).

$$Ra = 1/L \int L0 \, |f(x)| \, dx \, ,$$

where L = sampling length

(6) Oxygen Permeability Evaluation Method

For each of the respective Working Examples and Comparative Examples, an oxygen permeability measurement apparatus ("Ox-Tran (registered trademark) 1/50"; manufactured by Mocon) was used to measure the oxygen permeabilities of samples in the form of the laminated film obtained at the step in which the coating layer had been laminated to the substrate film in environments in which temperature was 23° C and humidity was 65% RH in accordance with the method at JIS-K7126 B. Note that measurement of oxygen permeability was carried out in the direction that tended to cause oxygen to pass therethrough from the substrate film side to the coating layer side.

(7) Water Vapor Permeability Evaluation Method

For each of the respective Working Examples and Comparative Examples, a water vapor permeability measurement apparatus ("Permatran-W 3/33MG"; manufactured by Mocon) was used to measure the water vapor permeabilities of samples in the form of the laminated film obtained at the step in which the coating layer had been laminated to the substrate film in an environment in which temperature was 40° C and humidity was 90% RH in accordance with the method at JIS-K7129 B. Note that measurement of water vapor permeability was carried out in the direction that tended to cause water vapor to pass therethrough from the substrate film side to the coating layer side.

(8) Evaluation of Resistance to Blocking of Laminated Film

At each of the respective Working Examples and Comparative Examples, samples were in the form of the laminated film obtained at the step in which the coating layer had been laminated to the substrate film, sets of two samples cut into rectangular strips that were 15 mm in width and 200 mm in length being prepared, 1 droplet of water (approximately 0.02 g) was deposited on the coating layer face of one of the samples, following which the other sample was layered thereover so as to cause the coating layer face thereof to face it, these were sandwiched between glass plates and dried for 24 hours while being maintained at a temperature of 40° C to cause evaporation of moisture therefrom, following which the two rectangular pieces were mutually detached, and the situation with respect to film attachment was reviewed. Samples that were attached to such an extent that the film tore during detachment were evaluated as BAD, while those that were capable of being smoothly detached without tearing of the film were evaluated as GOOD.

(9) Evaluation of Coating Layer Solvent Volatility

For each of the respective Working Examples and Comparative Examples, using samples in the form of the laminated film obtained at the step in which the coating layer had been laminated to the substrate film, the coating layer was pressed on lightly with a paper towel, at which time samples for which coating layer adhered to the paper towel were considered to have inadequate solvent volatility and were evaluated as BAD, and samples for which coating layer did not adhere to the paper towel were considered to have adequate solvent volatility and were evaluated as GOOD.

(10) Evaluation of Coating Layer External Appearance

For each of the respective Working Examples and Comparative Examples, using samples in the form of the laminated film obtained at the step in which the coating layer had been laminated to the substrate film, samples for which it was apparent from visual inspection that there were voids, bands, unevenness, or the like at the coating layer were considered to have poor external appearance and were evaluated as BAD, and samples for which there was none of the foregoing were considered to have satisfactory external appearance and were evaluated as GOOD.

Fabrication of Laminated Body

Following application of polyurethane-type adhesive (Takelac A525S/Takenate A50 manufactured by Mitsui Chemicals, Inc.) to the laminated body obtained at each of the Working Examples and Comparative Examples in sufficient amount to cause thickness following 80° C drying treatment to be 3 μm, this was dry-laminated on a metal roller heated to 60° C with unstretched polypropylene film (P1128 manufactured by Toyobo Co., Ltd.; thickness 30 μm; taken to be CPP), and was made to undergo aging for 4 days at 40° C to obtain a gas barrier laminated body for evaluation (hereinafter sometimes referred to as "Laminated Body a").

(11) Lamination Strength Evaluation Method

Test pieces of width 15 mm and length 200 mm were cut from the laminated body fabricated above, and a Tensilon universal material test apparatus ("Tensilon UMT-II-500" manufactured by Toyo Baldwin) was used to measure lamination strength (normal temperature) under conditions of temperature 23° C and relative humidity 65%. Note that measurement of lamination strength was carried out at an elongation rate of 200 mm/min, strength being measured when the laminated film layer and the heat-sealable resin layer of each of the respective laminated films obtained at the Working Examples and Comparative Examples were peeled apart at a peel angle of 90°.

Details regarding the coating solutions used at the present Working Examples and Comparative Examples are listed below. Note that these were employed at Working Examples 1 through 6 and at Comparative Examples 1 through 10, and are shown in TABLE 1

Polyvinyl Alcohol Resin (A)

10 parts by mass of fully saponified polyvinyl alcohol resin (manufactured by Nippon Synthetic Chemical Co.; product name = G Polymer OKS8049Q; saponification 99.0% or higher; average degree of polymerization 450) was added to 90 parts by mass of purified water, this was heated to 80° C while agitating, agitation being carried out for approximately 1 hour thereafter. This was then cooled to normal temperature, as a result of which a more or less transparent polyvinyl alcohol solution (PVA Solution) having a solids content of 10% was obtained.

Inorganic Lamellar Compound Liquid Dispersion (B)

5 parts by mass of montmorillonite (product name: Kunipia F; manufactured by Kunimine Industries Co., Ltd.), which is an inorganic lamellar compound, was added while agitating to 95 parts by mass of purified water, and this was adequately dispersed using a homogenizer at a setting of 1500 rpm. This was thereafter maintained for 1 day at 23° C to obtain an inorganic lamellar compound liquid dispersion having a solids content of 5%.

Coating Solution 1 Used at Coating Layer

Respective materials were mixed in the following ratios to prepare the coating liquid (resin composition for coating layer).

| | |
|---|---|
| Deionized water | 20.00 mass% |
| Isopropyl alcohol | 15.00 mass% |
| Polyvinyl Alcohol Resin (A) | 35.00 mass% |
| Inorganic Lamellar Compound Liquid Dividing Line (B) | 30.00 mass% |

Coating Solution 2 Used at Coating Layer

Respective materials were mixed in the following ratios to prepare the coating liquid (resin composition for coating layer).

| | |
|---|---|
| Deionized water | 15.00 mass% |
| Isopropyl alcohol | 15.00 mass% |
| Polyvinyl Alcohol Resin (A) | 30.00 mass% |
| Inorganic Lamellar Compound Liquid Dividing Line (B) | 40.00 mass% |

Coating Solution 3 Used at Coating Layer

Respective materials were mixed in the following ratios to prepare the coating liquid (resin composition for coating layer).

| | |
|---|---|
| Deionized water | 10.00 mass% |
| Isopropyl alcohol | 15.00 mass% |
| Polyvinyl Alcohol Resin (A) | 25.00 mass% |
| Inorganic Lamellar Compound Liquid Dividing Line (B) | 50.00 mass% |

Coating Solution 4 Used at Coating Layer

Respective materials were mixed in the following ratios to prepare the coating liquid (resin composition for coating layer).

| | |
|---|---|
| Deionized water | 5.00 mass% |
| Isopropyl alcohol | 15.00 mass% |
| Polyvinyl Alcohol Resin (A) | 20.00 mass% |
| Inorganic Lamellar Compound Liquid Dividing Line (B) | 60.00 mass% |

Coating Solution 5 Used at Coating Layer

Respective materials were mixed in the following ratios to prepare the coating liquid (resin composition for coating layer).

| | |
|---|---|
| Deionized water | 35.00 mass% |
| Isopropyl alcohol | 15.00 mass% |
| Polyvinyl Alcohol Resin (A) | 50.00 mass% |

Coating Solution 6 Used at Coating Layer

Respective materials were mixed in the following ratios to prepare the coating liquid (resin composition for coating layer).

| | |
|---|---|
| Deionized water | 30.00 mass% |
| Isopropyl alcohol | 15.00 mass% |
| Polyvinyl Alcohol Resin (A) | 45.00 mass% |
| Inorganic Lamellar Compound Liquid Dividing Line (B) | 10.00 mass% |

Coating Solution 7 Used at Coating Layer

Respective materials were mixed in the following ratios to prepare the coating liquid (resin composition for coating layer).

| | |
|---|---|
| Isopropyl alcohol | 15.00 mass% |
| Polyvinyl Alcohol Resin (A) | 15.00 mass% |
| Inorganic Lamellar Compound Liquid Dividing Line (B) | 70.00 mass% |

Coating Solution 8 Used at Coating Layer

The following materials were mixed in the mass% ratios indicated below, and were dissolved by causing this to undergo agitation for not less than 30 minutes. Next, a filter of nominal filtration rating 50 μm was used to remove undissolved substances to prepare the coating liquid (resin composition for coating layer).

| | |
|---|---|
| Deionized water | 37.50 mass% |
| Polyvinylidene Chloride Resin (C) | 62.50 mass% |

(Saran Latex L557 manufactured by Asahi Kasei Chemicals Corporation; fractional solids content 48%)

Coating of Film with Coating Solution (Lamination of Coating Layer)

The gravure roll coating method was used to apply the coating solution prepared above to the corona-treated surface of the substrate film, and this was predried for 4 seconds at 90° C, following which this underwent drying proper for 4 seconds at 130° C to obtain the coating layer. The coated amount following drying was 0.25 g/m$^2$ (dry). This was thereafter made to undergo post-heating treatment for 2 days at 40° C. The coating solution that made up the coating layer, and the foregoing temperature during drying proper and post-heating treatment conditions, were varied at the respective Working Examples and Comparative Examples as indicated at TABLE 1.

Laminated films on which a coating layer/inorganic thin film layer was/were provided over a substrate film were prepared in the manner described above. The laminated films obtained were subjected to evaluation. Results are shown in TABLE 2.

TABLE 1

| | Substrate | | Coating Solution (Name and Mass% Ratios) | | | | Coating layer (Name and Mass% Ratios) | | | | Drying Conditions | | | |
| --- | --- | --- | --- | --- | --- | --- | --- | --- | --- | --- | --- | --- | --- | --- |
| | | | | | | | | | | | Predrying | | Drying Proper | |
| | Material | Mass% Ratio | Water | IPA | Polyvinyl Alcohol Resin (A) | Inorganic Lamellar Compound Liquid Dividing Line (B) | (A) | (B) | (C) | Amount attached thereto [g/m$^2$] | Temperature (°C) | Time (seconds) | Temperature (°C) | Time (seconds) |
| Working Example 1 | OPP | 100 | 20 | 15 | 35 | 30 | 70 | 30 | - | 0.40 | 90 | 4 | 130 | 4 |
| Working Example 2 | OPP | 100 | 15 | 15 | 30 | 40 | 60 | 40 | - | 0.40 | 90 | 4 | 130 | 4 |
| Working Example 3 | OPP | 100 | 10 | 15 | 25 | 50 | 50 | 50 | - | 0.40 | 90 | 4 | 130 | 4 |
| Working Example 4 | OPP | 100 | 5 | 15 | 20 | 60 | 40 | 60 | - | 0.40 | 90 | 4 | 130 | 4 |
| Working Example 5 | OPP | 100 | 10 | 15 | 25 | 50 | 50 | 50 | - | 0.20 | 90 | 4 | 130 | 4 |
| Working Example 6 | OPP | 100 | 10 | 15 | 25 | 50 | 50 | 50 | - | 0.50 | 90 | 4 | 130 | 4 |
| Comparative Example 1 | OPP | 100 | 35 | 15 | - | 50 | 100 | - | - | 0.40 | 90 | 4 | 130 | 4 |
| Comparative Example 2 | OPP | 100 | 30 | 15 | 45 | 10 | 90 | 10 | - | 0.40 | 90 | 4 | 130 | 4 |
| Comparative Example 3 | OPP | 100 | - | 15 | 15 | 70 | 30 | 70 | - | 0.40 | 90 | 4 | 130 | 4 |
| Comparative Example 4 | OPP | 100 | 10 | 15 | 25 | 50 | 50 | 50 | - | 0.08 | 90 | 4 | 130 | 4 |
| Comparative Example 5 | OPP | 100 | 10 | 15 | 25 | 50 | 50 | 50 | - | 1.5 | 90 | 4 | 130 | 4 |
| Comparative Example 6 | OPP | 100 | - | - | - | - | - | - | 100 | 1.5 | 90 | 4 | 130 | 4 |

| | Substrate | | Coating Solution (Name and Mass% Ratios) | | | | Coating layer (Name and Mass% Ratios) | | | | Drying Conditions | | | |
|---|---|---|---|---|---|---|---|---|---|---|---|---|---|---|
| | | | | | | | | | | | Predrying | | Drying Proper | |
| | Material | Mass% Ratio | Water | IPA | Polyvinyl Alcohol Resin (A) | Inorganic Lamellar Compound Liquid Dividing Line (B) | (A) | (B) | (C) | Amount attached thereto [g/m²] | Temperature (°C) | Time (seconds) | Temperature (°C) | Time (seconds) |
| Comparative Example 7 | PET | 100 | 10 | 15 | 25 | 50 | 50 | 50 | - | 0.40 | 90 | 4 | 130 | 4 |
| Comparative Example 8 | OPP | 100 | 15 | 15 | 30 | 40 | 60 | 40 | - | 0.40 | 90 | 1 | 130 | 4 |
| Comparative Example 9 | OPP | 100 | 15 | 15 | 30 | 40 | 60 | 40 | - | 0.40 | 70 | 4 | 130 | 4 |
| Comparative Example 10 | OPP | 100 | 15 | 15 | 30 | 40 | 60 | 40 | - | 0.40 | 120 | 4 | 130 | 4 |

TABLE 2

| | Volatilization of solvent at coating layer | External appearance of coating layer | Item Being Evaluated | | | | | | | | | |
|---|---|---|---|---|---|---|---|---|---|---|---|---|
| | | | Film Alone | | | | | | | | Laminated Body | |
| | | | FT-IR peak | | | Oxygen permeability | Water vapor permeability | Haze | Surface roughness | Resistance to blocking | Lamination strength | Ability to achieve mono-material construction |
| | | | P1 (1040cm$^{-1}$) | P2 (3300cm$^{-1}$) | (P1/P2) | [ml/m$^2$ ∙ day ∙ MPa] | [g/m$^2$ ∙ d] | [%] | [nm] | | [N/15mm] | |
| Working Example 1 | GOOD | GOOD | 0.040 | 0.005 | 8 | 47 | 3.1 | 13 | 3.55 | GOOD | 2.1 | GOOD |
| Working Example 2 | GOOD | GOOD | 0.070 | 0.015 | 5 | 27 | 3.3 | 13 | 3.77 | GOOD | 1.8 | GOOD |
| Working Example 3 | GOOD | GOOD | 0.044 | 0.002 | 22 | 25 | 2.4 | 14 | 4.20 | GOOD | 1.5 | GOOD |
| Working Example 4 | GOOD | GOOD | 0.108 | 0.005 | 22 | 22 | 2.8 | 16 | 4.90 | GOOD | 1.5 | GOOD |
| Working Example 5 | GOOD | GOOD | 0.051 | 0.004 | 13 | 50 | 3.2 | 11 | 3.03 | GOOD | 1.5 | GOOD |
| Working Example 6 | GOOD | GOOD | 0.050 | 0.002 | 25 | 22 | 3.5 | 15 | 4.40 | GOOD | 1.5 | GOOD |
| Comparative Example 1 | GOOD | GOOD | 0.020 | 0.016 | 1 | 1300 | 5.0 | 3 | 0.73 | BAD | 1.8 | GOOD |
| Comparative Example 2 | GOOD | GOOD | 0.012 | 0.029 | 0 | 200 | 3.5 | 9 | 1.56 | BAD | 1.7 | GOOD |
| Comparative Example 3 | GOOD | GOOD | 0.107 | 0.001 | 107 | 200 | 3.4 | 15 | 5.41 | GOOD | 0.4 | GOOD |
| Comparative Example 4 | GOOD | GOOD | 0.055 | 0.005 | 11 | 320 | 5.1 | 9 | 4.38 | GOOD | 1.1 | GOOD |
| Comparative Example 5 | GOOD | GOOD | 0.053 | 0.002 | 27 | 35 | 4 | 12 | 4.88 | GOOD | 1.8 | FAIR |
| Comparative Example 6 | GOOD | GOOD | 0.039 | 0.000 | - | 50 | 5 | 4 | 5.00 | GOOD | 3.0 | BAD |

(continued)

| | Volatilization of solvent at coating layer | External appearance of coating layer | Item Being Evaluated | | | | | | | | | | |
|---|---|---|---|---|---|---|---|---|---|---|---|---|---|
| | | | Film Alone | | | | | | | | | Laminated Body | |
| | | | FT-IR peak | | | Oxygen permeability | Water vapor permeability | Haze | Surface roughness | Resistance to blocking | Lamination strength | Ability to achieve mono-material construction |
| | | | P1 (1040cm$^{-1}$) | P2 (3300cm$^{-1}$) | (P1/P2) | [ml/m$^2$ ∎ day ∎ MPa] | [g/m$^2$ ∎ d] | [%] | [nm] | | [N/15mm] | |
| Comparative Example 7 | GOOD | GOOD | 0.053 | 0.003 | 18 | 30 | 20 or higher | 13 | 4.00 | GOOD | 1.9 | BAD |
| Comparative Example 8 | BAD | BAD | - | - | - | - | - | - | - | - | - | - |
| Comparative Example 9 | BAD | BAD | - | - | - | - | - | - | - | - | - | - |
| Comparative Example 10 | GOOD | GOOD | 0.068 | 0.014 | 5 | 67 | 4.0 | 21 | 9.87 | GOOD | 0.9 | GOOD |

INDUSTRIAL UTILITY

The present invention makes it possible to provide a laminated film that is a film permitting formation of a laminate constitution constituted almost completely of a single type of resin having little environmental impact made up primarily of polypropylene film, and that has capabilities as required for adhesive properties and gas barrier properties sought for packaging materials. Moreover, because a laminated film in accordance with the present invention can be easily manufactured, having excellent workability and requiring a small number of processing operations, it is excellent in terms of both economical qualities and manufacturing stability, and makes it possible to provide a gas barrier film having homogeneous characteristics.

**Claims**

1.  A laminated film which is a laminated film that comprises a coating layer comprising an inorganic lamellar compound and a polyvinyl-alcohol-based copolymer on at least one face of a substrate film, the laminated film being **characterized in that** it satisfies conditions (a) through (d), below;

    (a) the substrate film is a stretched film employing propylenic resin;
    (b) the coating layer is attached thereto in an amount that is not less than 0.10 g/m$^2$ but not greater than 0.50 g/m$^2$;
    (c) a total reflection infrared absorption spectrum of the laminated film is such that a ratio (P1/P2) of a peak intensity (P1) at which there is maximum absorption in a 1040 cm$^{-1}$ $\pm$ 10 cm$^{-1}$ domain and a peak intensity (P2) at which there is maximum absorption in a 3300 cm$^{-1}$ $\pm$ 10 cm$^{-1}$ domain is within a range that is 3.0 to 25.0; and
    (d) arithmetic mean roughness in a 2-$\mu$m square of the coating layer at the laminated film is within a range that is 2.0 nm to 8.0 nm.

2.  The laminated film according to claim 1 **characterized in that** oxygen permeability of the laminated film in an environment that is 23° C and 65% RH is not greater than 50 ml/m$^2$·d·MPa; and water vapor permeability thereof in an environment that is 40° C and 90% RH is not greater than 4 g/m$^2$·d.

3.  The laminated film according to claim 1 or 2 **characterized in that** the inorganic lamellar compound of the coating layer contains a montmorillonitic compound as a constituent component thereof.

4.  Packaging material in which an olefinic sealant layer is laminated to one face of the laminated film according to any of claims 1 through 3.

## INTERNATIONAL SEARCH REPORT

International application No.

**PCT/JP2021/028150**

### A. CLASSIFICATION OF SUBJECT MATTER

***B32B 27/30***(2006.01)i; ***B32B 27/20***(2006.01)i; ***B65D 65/40***(2006.01)i
FI:  B32B27/30 102; B65D65/40 D; B32B27/20 Z

According to International Patent Classification (IPC) or to both national classification and IPC

### B. FIELDS SEARCHED

Minimum documentation searched (classification system followed by classification symbols)

B32B1/00-43/00, B65D65/00-65/46, C09D1/00-10/00, C09D101/00-201/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 06-093133 A (SUMITOMO CHEMICAL INDUSTRY COMPANY LIMITED) 05 April 1994 (1994-04-05)<br>claims, paragraphs [0025], [0030], examples, table 2 | 1-4 |
| X | JP 11-151786 A (TORAY INDUSTRIES, INC.) 08 June 1999 (1999-06-08)<br>claims. paragraphs [0001], [0025], [0040], examples | 1-4 |
| A | JP 2001-009983 A (TORAY INDUSTRIES, INC.) 16 January 2001 (2001-01-16) | 1-4 |
| A | JP 2005-225140 A (TOKUYAMA CORPORATION) 25 August 2005 (2005-08-25) | 1-4 |
| A | JP 2003-268183 A (KURARAY CO., LTD.) 25 September 2003 (2003-09-25) | 1-4 |

☐ Further documents are listed in the continuation of Box C.      ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **30 September 2021** | **12 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/028150**

| Patent document cited in search report | | | Publication date (day/month/year) | Patent family member(s) | | | Publication date (day/month/year) |
|---|---|---|---|---|---|---|---|
| JP | 06-093133 | A | 05 April 1994 | US | 5700560 | A | |
| | | | | claims, column 9, lines 52-55, column 11, lines 17-28, examples, table 2 | | | |
| | | | | EP | 590263 | A2 | |
| | | | | KR | 10-0312876 | B1 | |
| | | | | CN | 1082071 | A | |
| JP | 11-151786 | A | 08 June 1999 | (Family: none) | | | |
| JP | 2001-009983 | A | 16 January 2001 | (Family: none) | | | |
| JP | 2005-225140 | A | 25 August 2005 | (Family: none) | | | |
| JP | 2003-268183 | A | 25 September 2003 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000052501 A
- JP H41992359033 A
- JP 2003231221 A
- JP H41992345841 A
- JP 2006095782 A
- JP H91997111017 A
- JP 2005035167 A